# EUROPÄISCHE PATENTSCHRIFT

(11) **EP 2 864 160 B1**
(45) Veröffentlichungstag und Bekanntmachung des Hinweises auf die Patenterteilung: **01.11.2017**
(21) Anmeldenummer: 13739952.3
(22) Anmeldetag: 25.06.2013
(51) Int. Cl.: B60R 21/2338, B60R 21/239

(54) **GASSACKANORDNUNG FÜR EIN FAHRZEUGINSASSEN-RÜCKHALTESYSTEM**
AIRBAG ARRANGEMENT FOR A VEHICLE OCCUPANT RESTRAINT SYSTEM
ENSEMBLE AIRBAG POUR UN SYSTÈME DE RETENUE D'UN OCCUPANT DE VÉHICULE AUTOMOBILE

(30) Priorität: 25.06.2012 DE 102012210756
(43) Veröffentlichungstag der Anmeldung: 29.04.2015
(73) Patentinhaber: Takata AG, 63743 Aschaffenburg (DE)
(72) Erfinder: SENNERT, Philipp, 97218 Gerbrunn (DE)
(74) Vertreter: Maikowski & Ninnemann Patentanwälte Partnerschaft mbB
(86) Internationale Anmeldenummer: PCT/EP2013/063248
(87) Internationale Veröffentlichungsnummer: WO 2014/001317

(56) Entgegenhaltungen:
- WO-A1-2009/020786
- DE-U1-202005 005 797
- DE-U1-202011 001 429
- GB-A- 2 306 409

## Beschreibung

Die Erfindung betrifft Gassackanordnung für ein Fahrzeuginsassen-Rückhaltesystem gemäß dem Oberbegriff des Anspruchs 1.

Eine derartige Gassackanordnung, die einen Gassack mit einer Abströmeinrichtung, ein mit der Abströmeinrichtung zusammenwirkendes Steuerelement und einen Freigabemechanismus zum Freigeben des Steuerelementes umfasst, ist aus der US 2009/0256338 A1 bekannt. Der Freigabemechanismus umfasst hier eine Schneidvorrichtung, die bei Aktivierung des Freigabemechanismus ein bandförmiges Steuerelement durchtrennt. Zumindest die Schneidvorrichtung muss jedoch außerhalb des Gassacks untergebracht werden und besteht aus mehreren Einzellteilen, was ihre Herstellung verteuert.

Aus der DE 20 2011 001429 U1 ist eine Airbagmodul für ein Kraftfahrzeug bekannt, das einen Gassack mit einer Entlüftungsöffnung aufweist. Eine Vorrichtung zur Steuerung des Austrittsquerschnitts der Entlüftungsöffnung umfasst ein Abdeckteil, mit dem die Entlüftungsöffnung überdeckbar ist, um diese zu verschließen, und einen Betätigungsmechanismus, der mit dem Abdeckteil zusammenwirkt, um die Entlüftungsöffnung zu öffnen, so dass Gas aus dem Gassack entweichen kann.

Die GB 2 306 409 A beschreibt eine Gassackanordnung, die einen Gassack mit einer Abströmöffnung aufweist. Ein Freigabemechanismus umfasst ein befüllbares Element, das mit einem Abdeckabschnitt, der die Abströmöffnung zunächst überdeckt, fest verbunden ist. Nach Aufblasen des befüllbaren Elementes wird der Abdeckabschnitt von der Abströmöffnung weggezogen, so dass Gas aus dem Gassack abströmen kann.

Das von der vorliegenden Erfindung zu lösende Problem besteht darin, eine Gassackanordnung mit einem Freigabemechanismus bereitzustellen, die möglichst kompakt und kostengünstig herstellbar ist.

Dieses Problem wird durch die Bereitstellung einer Gassackanordnung mit den kennzeichnenden Merkmalen des Anspruchs 1 gelöst. Weiterbildungen der Erfindung sind in den abhängigen Ansprüchen angegeben.

Danach wird eine Gassackanordnung für ein Fahrzeuginsassen-Rückhaltesystem geschaffen, mit
- einem aufblasbaren Gassack, der mindestens eine Abströmeinrichtung zum Abströmen von Gas aus dem Gassack aufweist, wobei
- die Abströmeinrichtung in einem ersten Zustand einen ersten Abströmquerschnitt und in einem zweiten Zustand einen zweiten Abströmquerschnitt aufweist; und
- einem Freigabemechanismus, der die Abströmeinrichtung zunächst festlegt und der nach Aktivieren die Abströmeinrichtung freigibt, wobei
- der Freigabemechanismus ein mit Gas befüllbares Element aufweist, mit dem die Abströmeinrichtung so verbunden ist, dass sie vor Befüllen des befüllbaren Elementes an diesem festgelegt ist und sich bei Befüllen des befüllbaren Elementes von diesem löst, wobei die Abströmeinrichtung über eine lösbare Verbindung mittelbar oder unmittelbar mit dem befüllbaren Element verbunden ist, die beim Befüllen des befüllbaren Elementes reißt und die Abströmeinrichtung freigibt, so dass die Abströmeinrichtung aus dem ersten in den zweiten Zustand übergeht.

Die Abströmeinrichtung ist insbesondere von dem befüllbaren Element verschieden, d.h. es handelt sich um ein zu dem befüllbaren Element separates (entsprechend separat hergestelltes) Teil, das mittelbar oder unmittelbar mit dem befüllbaren Element verbunden ist.

Die Abströmeinrichtung ermöglicht zusammen mit dem Freigabemechanismus ein angepasstes Ablassen von Gas aus dem Gassack ("adaptive venting"), um den Innendruck des Gassacks einstellen zu können, insbesondere in Abhängigkeit von der Körpergröße und/oder dem Körpergewicht des mit dem Gassack zu schützenden Fahrzeuginsassen.

Beispielsweise weist die Abströmeinrichtung in dem ersten Zustand einen kleineren Abströmquerschnitt auf als in dem zweiten Zustand, so dass im ersten Zustand weniger Gas aus dem Gassack entweichen kann als in dem zweiten Zustand. Somit weist der Gassack im Vergleich mit dem zweiten Zustand der Abströmeinrichtung während des Aufblasens und/oder nach dem Aufblasen des Gassacks einen höheren Innendruck auf, wenn sich die Abströmeinrichtung in ihrem ersten Zustand befindet. Insbesondere ist die Abströmeinrichtung in dem ersten Zustand verschlossen, so dass im Wesentlichen kein Gas aus dem Gassack abströmt, während sie im zweiten Zustand geöffnet ist und ein Abströmen von Gas aus dem Gassack ermöglicht.

Es ist allerdings auch umgekehrt möglich, dass die Abströmeinrichtung in ihrem ersten Zustand einen größeren Abströmquerschnitt aufweist (z.B. vollständig geöffnet ist) als in dem zweiten Zustand (in dem sie z.B. vollständig geschlossen ist), d.h. der Abströmquerschnitt verringert sich nach Freigabe des Steuerelementes.

Der Freigabemechanismus wird insbesondere in Abhängigkeit von einem Signal einer Steuereinheit des Fahrzeugs aktiviert. Beispielsweise wird über sitzintegrierte Sensoren das Gewicht eines Fahrzeuginsassen bestimmt und in Abhängigkeit von dem Gewicht dem Freigabemechanismus signalisiert, dass sie bei einem Aktivieren des Gassacks (d.h. einer zum Aufblasen des Gassacks vorgesehenen Aufblaseinheit, z.B. in Form eines Gasgenerators) ebenfalls aktiviert werden soll.

Das befüllbare Element ist insbesondere aus einem flexiblen Material (z.B. einem Gassackmaterial) gebildet und z.B. in Form eines Schlauches ausgebildet, wobei es z.B. nach dem Befüllen zumindest abschnittsweise eine hohlzylindrische Gestalt besitzt.

Die erfindungsgemäße Gassackanordnung weist zudem insbesondere ein von dem befüllbaren Element verschiedenes Steuerelement auf, das mit der Abströmeinrichtung derart zusammenwirkt, dass die Abströmeinrichtung bei festgelegtem Steuerelement in dem ersten Zustand gehalten wird und nach Freigabe des Steuerelementes aus dem ersten in den zweiten Zustand übergeht, wobei das Steuerelement über die lösbare Verbindung mit dem befüllbaren Element verbunden ist (d.h. lösbar an dem befüllbaren Element festgelegt ist).

Denkbar ist jedoch auch, dass die Abströmeinrichtung über die lösbare Verbindung unmittelbar mit dem befüllbaren Element verbunden ist und die Gassackanordnung entsprechend kein Steuerelement aufweist.

Das Steuerelement kann länglich ausgebildet sein, z.B. in Form eines Bandes oder Fadens. Beispielsweise ist ein Ende des länglichen Steuerelementes mit einem Element der Abströmeinrichtung und das andere Ende mit einem Element des Freigabemechanismus, insbesondere dem befüllbaren Element, verbunden.

Insbesondere ist ein Ende der Abströmeinrichtung oder (falls vorhanden) des Steuerelementes auf diese Weise mit dem befüllbaren Element verbunden. Die lösbare Verbindung ist z.B. durch eine Näh- oder Klebverbindung, insbesondere über mindestens eine Reißnaht realisiert, wobei sie insbesondere so gestaltet sein kann, dass sie das befüllbare Element zunächst (d.h. vor dem Befüllen des aufblasbaren Elementes, d.h. vor "Aktivieren" des Freigabemechanismus) zumindest teilweise verschließt.

Möglich ist auch, dass der Freigabemechanismus eine Befüllvorrichtung zum Befüllen des befüllbaren Elementes umfasst, wobei die Befüllvorrichtung insbesondere zusätzlich zu einer Aufblaseinheit zum Aufblasen des Gassacks vorhanden ist. Die Befüllvorrichtung ist z.B. in Form eines Gasgenerators, insbesondere eines Mikrogasgenerators, einer Zündpille und/oder eines Druckgasreservoirs ausgebildet, und ist z.B. an einem Träger festgelegt. Denkbar ist auch, dass das befüllbare Element und/oder die Aufblaseinheit zum Aufblasen des Gassacks ebenfalls an dem Träger festgelegt sind.

Nach einer weiteren Variante der Erfindung umfasst die Abströmeinrichtung mindestens eine Abströmöffnung des Gassacks, wobei die Abströmöffnung insbesondere in einer eine aufblasbare Kammer des Gassacks begrenzenden Gassacklage ausgebildet ist. Beispielsweise bestimmt die Größe der Abströmöffnung den Abströmquerschnitt der Abströmeinrichtung. Darüber hinaus kann die Abströmeinrichtung ein mit dem befüllbaren Element (z.B. über das oben erwähnte Steuerelement oder unmittelbar) gekoppeltes Verschlusselement umfassen, das in festgelegtem Zustand (d.h. in dem ersten Zustand der Abströmeinrichtung) die Abströmöffnung zumindest teilweise verschließt.

Bei Freigabe der Abströmeinrichtung (z.B. des Steuerelementes) wird der Zustand und/oder die Position des Verschlusselementes verändert, so dass die Abströmöffnung z.B. weniger verdeckt wird, d.h. sich der Abströmquerschnitt der Abströmeinrichtung vergrößert. Möglich ist auch der umgekehrte Fall, nämlich dass das Verschlusselement im ersten Zustand der Abströmeinrichtung die Abströmöffnung nur wenig verschließt (d.h. die Abströmeinrichtung einen relativ großen Abströmquerschnitt besitzt) und sich der Abströmquerschnitt bei Überführen der Abströmeinrichtung in den zweiten Zustand verkleinert.

Gemäß einer weiteren Ausgestaltung der Erfindung weist die Gassackanordnung ein Gehäuse (Modulgehäuse) auf, in dem sowohl das befüllbare Element als auch der Gassack angeordnet sind. Möglich ist insbesondere, dass das befüllbare Element zusammen mit dem Gassack in einer (gemeinsamen) Folie vakuumverpackt ist, d.h. einen Bestandteil eines Gassackpackages bildet, wobei sich das befüllbare Element z.B. innerhalb des Gassacks erstreckt, jedoch auch außerhalb des Gassacks angeordnet sein kann. Darüber hinaus können weitere Bestandteile der Freigabeeinrichtung und insbesondere auch das Steuerelement zusammen dem Gassack in der Folie vakuumverpackt sein.

Möglich ist, dass das befüllbare Element innerhalb des Gassacks angeordnet ist. Dies ist allerdings nicht zwingend; denkbar ist vielmehr auch, dass sich das befüllbare Element außerhalb des Gassacks befindet, wobei das Steuerelement z.B. mit einer sich ebenfalls außerhalb des Gassacks befindlichen Komponente der Abströmeinrichtung zusammenwirkt. In beiden Fällen kann das befüllbare Element unabhängig vom Gassack angebunden sein, d.h. es ist nicht (zumindest nicht unmittelbar) mit dem Gassack verbunden. Hierdurch kann das befüllbare Element eine Kraft (insbesondere eine Zugkraft) auf die Abströmeinrichtung ausüben, die erforderlich ist, um diese in ihrem ersten Zustand (d.h. z.B. in einem verschlossenen Zustand) zu halten.

Bei dem Gassack der erfindungsgemäßen Gassackanordnung handelt es z.B. um einen Seitengassack, der sich im aufgeblasenen Zustand zwischen dem zu schützenden Fahrzeuginsassen und einer Fahrzeugseitenstruktur erstreckt (und z.B. in oder an einem Fahrzeugsitz oder einer Fahrzeugtür angeordnet ist), oder um einen Fahrer- oder Beifahrergassack.

Die Erfindung betrifft auch ein Fahrzeug mit der erfindungsgemäßen Gassackanordnung.

Die Erfindung wird im Folgenden anhand von Ausführungsbeispielen unter Bezugnahme auf die Figuren näher erläutert. Es zeigen:
- Figur 1: schematisch einen Freigabemechanismus einer Gassackanordnung gemäß der Erfindung;
- Figur 2: einen in ein Gehäuse eingesetzten Freigabemechanismus einer Gassackanordnung gemäß der Erfindung;
- Figur 3: einen Ausschnitt aus einer erfindungsgemäßen Gassackanordnung;
- Figuren 4A und 4B: eine erfindungsgemäße Gassackanordnung mit geschlossener bzw. geöffneter Abströmeinrichtung;
- Figur 5: eine Gassackanordnung gemäß einem weiteren Ausführungsbeispiel der Erfindung; und
- Figur 6: eine Gassackanordnung gemäß noch einem weiteren Ausführungsbeispiel der Erfindung.

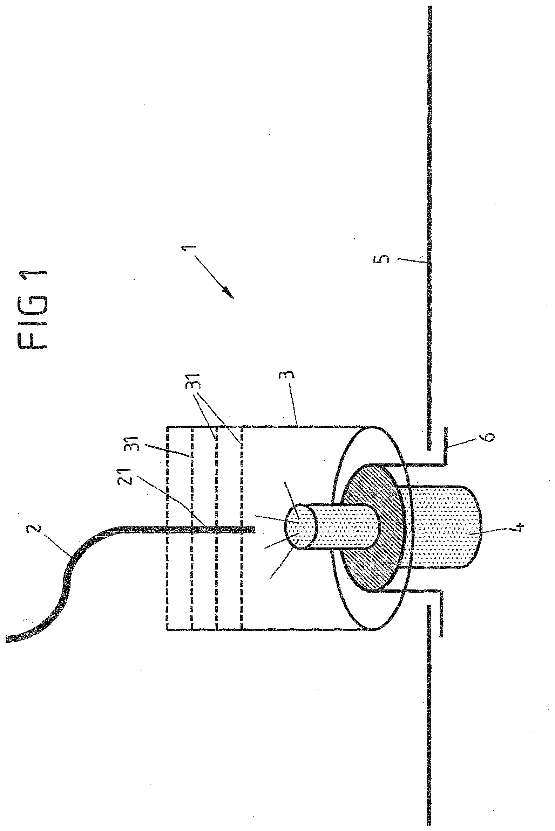

Der in Figur 1 dargestellte Freigabemechanismus 1 dient zum Freigeben eines Steuerelementes in Form eines Bandes (oder Fadens) 2 in Abhängigkeit von einem Steuersignal. Das Band 2 dient zum Steuern einer Abströmeinrichtung eines Gassacks (nicht dargestellt), über die Gas aus dem Gassackinneren nach außen abströmen kann. Beispielsweise ist ein Ende (das in Fig. 1 nicht dargestellte Ende) des Bandes 2 mit einer Komponente (z.B. einem Verschlusselement) der Abströmeinrichtung verbunden.

Der Freigabemechanismus 1 umfasst ein (insbesondere aus einem Gassackmaterial gebildetes) befüllbares Element in Form eines Druckschlauches 3, wobei ein Ende 21 des Bandes 2 an dem Druckschlauch 3 zunächst festgelegt ist, und zwar mittels einer als Reißverbindung gestalteten lösbaren Verbindung, die mehrere Reißnähte 31 umfasst.

Im festgelegten Zustand des Bandes 2 (d.h. sein Ende 21 ist über die Reißnähte 31 mit dem Druckschlauch 3 verbunden) kann dieses eine Zugkraft auf die Abströmeinrichtung ausüben, so dass diese auch bei einem Aufblasen des Gassacks in einem ersten Zustand verharrt, in dem sie einen ersten Abströmquerschnitt aufweist, der z.B. auch Null sein kann, d.h. die Abströmeinrichtung verschlossen ist und ein Abströmen von Gas über die Abströmeinrichtung nicht möglich ist.

Die Reißnähte 31 sind jedoch so beschaffen, dass sie bei Befüllen des Druckschlauches 3 infolge des ansteigenden Innendruckes im Druckschlauch 3 aufreißen und das Ende 21 des Bandes 2 freigeben. Im freigegebenen Zustand des Bandes 2 verringert sich die auf die Abströmeinrichtung ausgeübte Zugkraft oder entfällt ganz, wodurch die Abströmeinrichtung in einen zweiten Zustand übergeht, in dem sie einen vergrößerten Abströmquerschnitt aufweist und Gas aus dem Gassackinneren abströmen kann.

Zum Befüllen des Druckschlauches 3 dient eine Befüllvorrichtung in Form eines Mikrogasgenerators 4, der mit einem Abschnitt in den Druckschlauch 3 hineinragt und über ein Signal einer Steuereinheit des Fahrzeugs aktivierbar ist. Der Mikrogasgenerator 4 ist zusätzlich einer Aufblaseinheit (nicht dargestellt) vorgesehen, die zum Aufblasen des Gassacks dient.

Denkbar ist, dass die Reißnähte 31, die insbesondere an einem dem Mikrogasgenerator 4 abgewandten Ende des Druckschlauchs 3 angeordnet sind, zumindest teilweise so ausgeführt sind, dass sie den Druckschlauch 3, insbesondere dessen von dem Mikrogasgenerator 4 abgewandtes Ende, vor dem Befüllen verschließen, so dass z. B. nach Aktivieren des Mikrogasgenerators 4 ein möglichst schneller Druckaufbau in dem Druckschlauch 3 erfolgt. Beispielsweise befindet sich der Mikrogasgenerator 4 und der durch ihn zu befüllende Druckschlauch 3 zumindest teilsweise innerhalb eines Gassacks.

Der Mikrogasgenerator 4 ist an einem Träger in Form eines Klemmblechs 5 festgelegt, z. B. per Rast- oder Klemmverbindung, etwa über einen Befestigungsclip 6. Denkbar ist auch, dass der Druckschlauch 3 ebenfalls an dem Klemmblech 5 festgelegt ist.

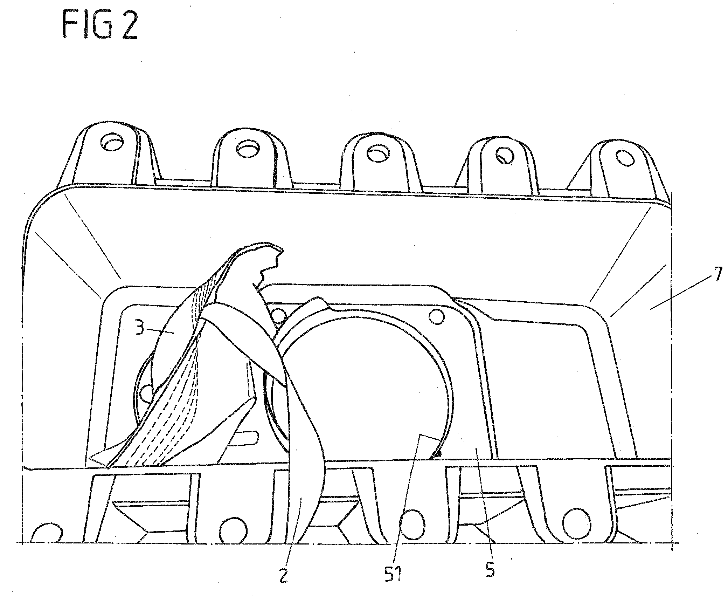

Eine Möglichkeit zur Anordnung des Freigabemechanismus 1 und des Bandes 2 gemäß Figur 1 in einer Gassackanordnung (Gassackmodul) ist in Figur 2 dargestellt. Danach befindet sich der Druckschlauch 3 in einem Gehäuse 7 des Gassackmoduls und ist an einem ebenfalls an dem Gehäuse 7 angeordneten Träger 5 befestigt. Der Druckschlauch 3 ist (mit einem Ende) ebenfalls an dem Träger 5 festgelegt. Darüber hinaus weist der Träger 5 eine Öffnung 51 zum Aufnehmen einer Aufblaseinheit in Form eines weiteren Gasgenerators (nicht dargestellt) auf, der zum Aufblasen des Gassacks (ebenfalls nicht dargestellt) dient.

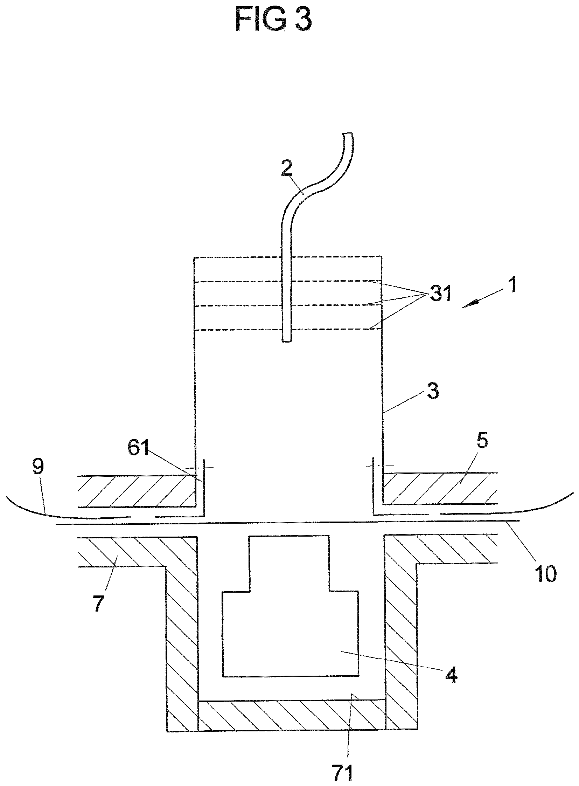

Wie in Fig. 3 dargestellt, ist es möglich, dass der Freigabemechanismus 1 Bestandteil eines Gassackpackage ist, wobei insbesondere der Druckschlauch 3, das Klemmblech (Halteblech) 5 und das Band 2) zusammen mit dem Gassack 9 in einer Vakuumfolie 10 vakuumverpackt sind. Die Vakuumfolie 10 verläuft zwischen dem Klemmblech 5 und einer Innenseite des Modulgehäuses 7.

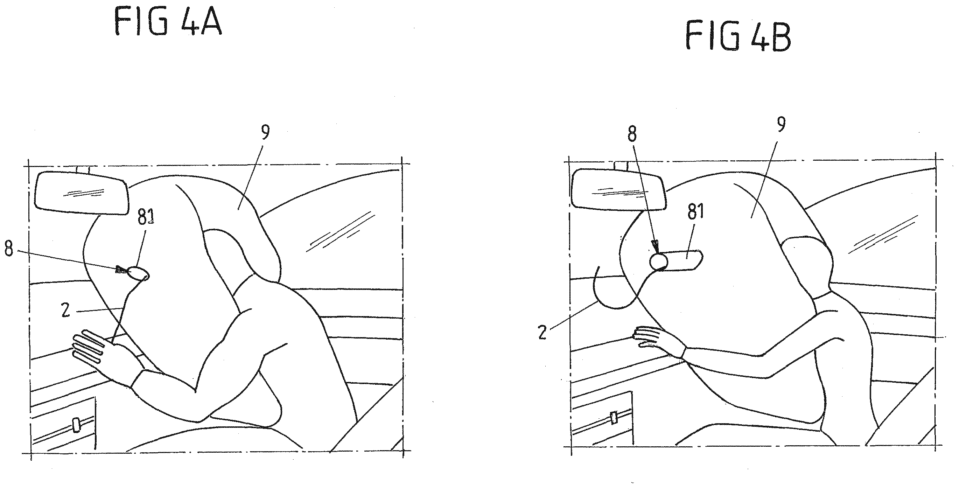

Der Druckschlauch 3 ist insbesondere über ein oder mehrere Klemmelement(e) 61 an dem Klemmblech 5 befestigt, wobei er so angeordnet ist, dass er sich innerhalb des Gassacks 9 erstreckt. Entsprechend verläuft auch das Band 2 im Innern des Gassacks 9 und wirkt z.B. mit einer in den Fig. 4A und 4B gezeigten Abströmeinrichtung zusammen.

Der zum Befüllen des Druckschlauches 3 bestimmte Mikrogasgenerator 4 ist an dem Modulgehäuse 7 angeordnet und zwar in einer sich von dem Klemmblech 5 weg erstreckenden Ausbuchtung 71 des Modulgehäuses 7.

Die Figuren 4A und 4B beziehen sich auf eine erfindungsgemäße Gassackanordnung, die z. B. mit einem Freigabemechanismus gemäß den Figuren 1 oder 2 ausgestattet ist (wobei der Freigabemechanismus in diesen Figuren nicht dargestellt ist). Die Gassackanordnung weist ein wiederum als Band 2 ausgebildetes Steuerelement auf, das mit einer Abströmeinrichtung 8 des Gassacks 9 zusammenwirkt.

Die Abströmeinrichtung 8 umfasst ein Verschlusselement in Form eines Verschlussschlauches 81, der vor einem Aktivieren des Freigabemechanismus, d. h. bei an dem Druckschlauch 3 aus Fig. 1 festgelegtem Band 2, eine in einer Hülle des Gassacks 9 ausgebildete Abströmöffnung verschließt. Dieser (erste) Zustand der Abströmeinrichtung 8 ist in Figur 4A gezeigt, wobei die Abströmeinrichtung 8 in diesem Zustand verschlossen ist. Der Freigabemechanismus wurde beim Auslösen des Gassacks 9 nicht aktiviert, da sich auf dem dem Gassack 9 zugeordneten Beifahrersitz ein relativ schwerer Fahrzeuginsasse befindet, so dass ein höherer Innendruck des Gassacks 9 erwünscht ist.

Wird ein leichterer Fahrzeuginsasse (z. B. ein Kind) auf dem Beifahrersitz detektiert, wird beim Auslösen des Gassacks 9 oder während des Aufblasens des Gassacks 9 auch der Freigabemechanismus aktiviert und das Band 2 freigegeben. Bei freigegebenem Band 2 gelangt die Abströmeinrichtung 8 in einen zweiten Zustand, in dem sie einen größeren Abströmquerschnitt aufweist als in dem ersten Zustand. Insbesondere wird die mittels des Verschlussschlauches 81 zunächst (z.B. vollständig) verschlossene Abströmöffnung in dem Gassack 9 nach Freigabe des Bandes 2 vollständig freigegeben (geöffnet). Das Öffnen der Abströmöffnung erfolgt dadurch, dass sich der Verschlussschlauch 81 nach Freigabe des Bandes 2 entfaltet und sich schließlich so erstreckt, dass er die Abströmöffnung des Gassacks 9 nicht mehr abdeckt (vgl. Fig. 4B). Beispielsweise weist der entfaltete Verschlussschlauch 81 einen Abströmquerschnitt auf, der zumindest näherungsweise dem Durchmesser der Abströmöffnung des Gassacks 9 entspricht.

Es ist insbesondere auch möglich, dass die in den Fig. 4A und 4B gezeigte Gassackanordnung als "Gassackpackage" ausgebildet ist, wobei insbesondere der Gassack 9, der Druckschlauch 3, das Band 2 und der Verschlussschlauch 81 innerhalb einer Folie vakuumverpackt sind. In dieser Variante erstreckt sich das Band 2 z.B. innerhalb des Gassacks 9.

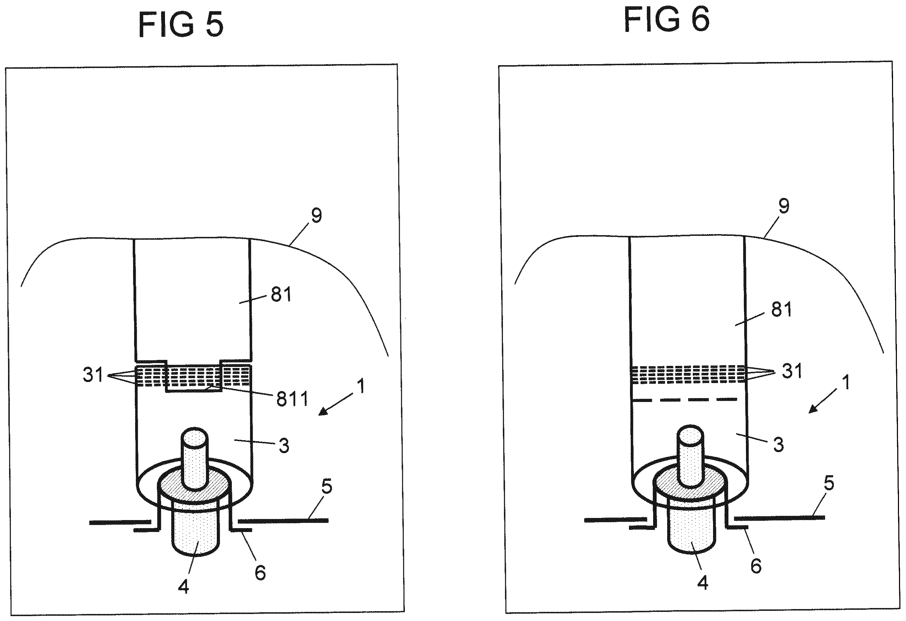

Figur 5 bezieht sich auf eine Abwandlung der Figuren 4A und 4B. Danach ist ebenfalls ein Verschlussschlauch 81 vorhanden. Der Verschlussschlauch 81 formt jedoch an seinem einen Ende zumindest eine Lasche 811 aus, die als Steuerelement fungiert. Neben der Lasche 811 ist kein weiteres Steuerelement vorhanden. Die Lasche 811 ist über mehrere Reißnähte 31 mit dem Druckschlauch 3 verbunden. Die Reißnähte 31 lösen sich bei Befüllen des Druckschlauches 3, wodurch die Lasche 811 und entsprechend der Verschlussschlauch 81 freigegeben wird.

Die Figur 6 stellt schematisch ein weiteres Ausführungsbeispiel der Erfindung dar. Hier ist in Abwandlung der Fig. 5 kein separates Steuerelement vorhanden, sondern der Verschlussschlauch 81 ist unmittelbar über die Reißnähte 31 mit dem Druckschlauch 3 verbunden. Denkbar ist, dass sich das mit dem Druckschlauch 3 verbundene Ende des Verschlussschlauches 81 in den Druckschlauch 3 hinein erstreckt, d.h. einen etwas kleineren Durchmesser als der Druckschlauch 3 aufweist.

Das Ende des Verschlussschlauches 81 könnte jedoch auch einen etwas größeren Durchmesser als der Druckschlauch 3 aufweisen und sich entsprechend ein Ende des Druckschlauches 3 zum Teil in dem Verschlussschlauch 81 befinden. Möglich ist auch, dass eine Stirnseite des Verschlussschlauches 81 auf einer Stirnseite des Druckschlauches 3 aufliegt, d.h. das Ende des Verschlussschlauches 81 über die Reißnähte 31 auf Stoß mit einem Ende des Druckschlauches 3 verbunden ist. Durch die direkte Verbindung des Verschlussschlauches 81 mit dem Druckschlauch 3 kann insbesondere ein unerwünschtes Entweichen von Gas aus dem Gassack über den geschlossenen Verschlussschlauches 81, das bei dem über das Band 2 mit dem Druckschlauch 3 verbundenen Verschlussschlauch der Fig. 4A und 4B auftreten kann, vermieden werden. Zudem kann die Gassackanordnung aufgrund des Entfalls eines separaten Steuerbandes möglichst kostengünstig hergestellt werden.

Es wird darauf hingewiesen, dass die erfindungsgemäße Gassackanordnung natürlich auch anders gestaltete Abströmeinrichtungen aufweisen kann, d.h. der Freigabemechanismus kann auch mit anderen Komponenten als den in den Fig. 3A und 3B gezeigten Verschlussschlauch 81 zusammenwirken. Denkbar ist z. B., dass ein flächiges Abdeckelement der Abströmeinrichtung eine Abströmöffnung in dem Gassack zunächst verdeckt und nach Freigeben des Bandes 2 in eine geöffnete Position gezogen wird (etwa von dem sich entfaltenden Gassack).

### Bezugszeichenliste

- 1: Freigabemechanismus
- 2: Band
- 3: Druckschlauch
- 4: Mikrogasgenerator
- 5: Klemmblech
- 6: Befestigungsclip
- 7: Gehäuse
- 8: Abströmeinrichtung
- 9: Gassack
- 10: Vakuumfolie
- 21: Ende
- 31: Reißnaht
- 61: Befestigungselement
- 71: Ausbuchtung
- 81: Verschlussschlauch
- 811: Lasche

## Patentansprüche

1. Gassackanordnung für ein Fahrzeuginsassen-Rückhaltesystem, mit
- einem aufblasbaren Gassack (9), der mindestens eine Abströmeinrichtung (8) zum Abströmen von Gas aus dem Gassack (9) aufweist, wobei
- die Abströmeinrichtung (8) in einem ersten Zustand einen ersten Abströmquerschnitt und in einem zweiten Zustand einen zweiten Abströmquerschnitt aufweist; und
- einem Freigabemechanismus (1), der die Abströmeinrichtung (8) zunächst festlegt und der nach Aktivieren die Abströmeinrichtung (8) freigibt,
**dadurch gekennzeichnet, dass**
der Freigabemechanismus (1) ein mit Gas befüllbares Element (3) aufweist, mit dem die Abströmeinrichtung (8) so verbunden ist, dass sie vor Befüllen des befüllbaren Elementes (3) an diesem festgelegt ist und sich bei Befüllen des befüllbaren Elementes (3) von diesem löst, wobei die Abströmeinrichtung (8) über eine lösbare Verbindung mittelbar oder unmittelbar mit dem befüllbaren Element (3) verbunden ist, die beim Befüllen des befüllbaren Elementes (3) reißt und die Abströmeinrichtung (8) freigibt, so dass die Abströmeinrichtung (8) aus dem ersten in den zweiten Zustand übergeht.

2. Gassackanordnung nach Anspruch 1, **dadurch gekennzeichnet, dass** die Abströmeinrichtung (8) von dem befüllbaren Element (3) verschieden ist.

3. Gassackanordnung nach Anspruch 1 oder 2, **gekennzeichnet durch** ein von dem befüllbaren Element verschiedenes Steuerelement (2), das mit der Abströmeinrichtung (8) derart zusammenwirkt, dass die Abströmeinrichtung (8) bei festgelegtem Steuerelement (2) in dem ersten Zustand gehalten wird und nach Freigabe des Steuerelementes (2) aus dem ersten in den zweiten Zustand übergeht, wobei das Steuerelement (2) über die lösbare Verbindung mit dem befüllbaren Element (3) verbunden ist.

4. Gassackanordnung nach Anspruch 1 oder 2, **dadurch gekennzeichnet, dass** die Abströmeinrichtung (8) über die lösbare Verbindung unmittelbar mit dem befüllbaren Element (3) verbunden ist.

5. Gassackanordnung nach einem der vorhergehenden Ansprüche, **dadurch gekennzeichnet, dass** das befüllbare Element (3) in Form eines Schlauches ausgebildet ist.

6. Gassackanordnung nach einem der Ansprüche 3 bis 5, **dadurch gekennzeichnet, dass** das Steuerelement (2) in Form eines Bandes oder Fadens ausgebildet ist.

7. Gassackanordnung nach einem der vorhergehenden Ansprüche, **dadurch gekennzeichnet, dass** die lösbare Verbindung durch mindestens eine Reißnaht (31) realisiert ist.

8. Gassackanordnung nach einem der vorhergehenden Ansprüche, **dadurch gekennzeichnet, dass** die lösbare Verbindung das befüllbare Element (3) zunächst zumindest teilweise verschließt.

9. Gassackanordnung nach einem der vorhergehenden Ansprüche, **dadurch gekennzeichnet, dass** der Freigabemechanismus (1) eine Befüllvorrichtung (4) zum Befüllen des befüllbaren Elementes (3) umfasst.

10. Gassackanordnung nach Anspruch 9, **gekennzeichnet durch** eine Aufblaseinheit zum Aufblasen des Gassacks (9), wobei die Befüllvorrichtung (4) und die Aufblaseinheit an einem Träger (5) festgelegt sind.

11. Gassackanordnung nach einem der vorhergehenden Ansprüche, **dadurch gekennzeichnet, dass** die Abströmeinrichtung (8) mindestens eine Abströmöffnung des Gassacks (9) umfasst.

12. Gassackanordnung nach Anspruch 11, soweit rückbezogen auf einen der Ansprüche 3 bis 10, **dadurch gekennzeichnet, dass** der Abströmeinrichtung (8) ein mit dem Steuerelement (2) gekoppeltes Verschlusselement (81) umfasst, das bei festgelegtem Steuerelement (2) die Abströmöffnung zumindest teilweise verschließt.

13. Gassackanordnung nach Anspruch 12, **dadurch gekennzeichnet, dass** das Verschlusselement (81) schlauchartig ausgebildet ist.

14. Gassackanordnung nach einem der vorhergehenden Ansprüche, **gekennzeichnet durch** ein Gehäuse (7), in dem das befüllbare Element (3) und der Gassack (9) angeordnet sind.

15. Gassackanordnung nach einem der vorhergehenden Ansprüche, **dadurch gekennzeichnet, dass** der Gassack (9) und das befüllbare Element (3) in einer Folie (10) vakuumverpackt sind.

## Claims

1. A gas bag arrangement for a vehicle occupant restraint system, comprising
- an inflatable gas bag (9) which includes at least one vent device (8) for venting gas from the gas bag (9), wherein
- the vent device (8) in a first condition has a first outflow cross-section and in a second condition a second outflow cross-section; and
- a release mechanism (1) which initially fixes the vent device (8) and after activation releases the vent device (8),
**characterized in that**
the release mechanism (1) includes an element (3) that can be filled with gas, with which the vent device (8) is connected such that before filling of the fillable element (3) it is fixed at the same and during filling of the fillable element (3) is detached from the same, wherein the vent device (8) is indirectly or directly connected with the fillable element (3) via a releasable connection which will tear during filling of the fillable element (3) and release the vent device (8), such that the vent device (8) passes from the first into the second condition.

2. The gas bag arrangement according to claim 1, **characterized in that** the vent device (8) is different from the fillable element (3).

3. The gas bag arrangement according to claim 1 or 2, **characterized by** a control element (2) different from the fillable element, which cooperates with the vent device (8) such that when the control element (2) is fixed, the vent device (8) is held in the first condition and after release of the control element (2) passes from the first into the second condition, wherein the control element (2) is connected with the fillable element (3) via the releasable connection.

4. The gas bag arrangement according to claim 1 or 2, **characterized in that** the vent device (8) is directly connected with the fillable element (3) via the releasable connection.

5. The gas bag arrangement according to any of the preceding claims, **characterized in that** the fillable element (3) is formed in the form of a hose.

6. The gas bag arrangement according to at least one of the claims 3 to 5, **characterized in that** the control element (2) is formed in the form of a ribbon or thread.

7. The gas bag arrangement according to any of the preceding claims, **characterized in that** the releasable connection is realized by at least one tear seam (31).

8. The gas bag arrangement according to any of the preceding claims, **characterized in that** the releasable connection initially at least partly closes the fillable element (3).

9. The gas bag arrangement according to any of the preceding claims, **characterized in that** the release mechanism (1) comprises a filling device (4) for filling the fillable element (3).

10. The gas bag arrangement according to claim 9, **characterized by** an inflation unit for inflating the gas bag (9), wherein the filling device (4) and the inflation unit are fixed at a carrier (5).

11. The gas bag arrangement according to any of the preceding claims, **characterized in that** the vent device (8) comprises at least one outflow opening of the gas bag (9).

12. The gas bag arrangement according to claim 11, as far as referred back to one of the claims 3 to 10, **characterized in that** the vent device (8) comprises a closure element (81) coupled with the control element (2), which with fixed control element (2) at least partly closes the outflow opening.

13. The gas bag arrangement according to claim 12, **characterized in that** the closure element (81) is formed hose-like.

14. The gas bag arrangement according to any of the preceding claims, **characterized by** a housing (7) in which the fillable element (3) and the gas bag (9) are arranged.

15. The gas bag arrangement according to any of the preceding claims, **characterized in that** the gas bag (9) and the fillable element (3) are vacuum-packed in a film (10).

## Revendications

1. Ensemble airbag pour un système de retenue de passager de véhicule, avec :
- un airbag (9) gonflable comportant au moins un dispositif d'évacuation (8) pour évacuer le gaz hors de l'airbag (9) ;
- le dispositif d'évacuation (8) comportant dans un premier état une première section transversale d'évacuation et dans un deuxième état une deuxième section transversale d'évacuation; et
- un mécanisme de libération (1) fixant d'abord le dispositif d'évacuation (8) et libérant après l'activation le dispositif d'évacuation (8);
**caractérisé en ce que** :
le mécanisme de libération (1) comporte un élément (3) remplissable de gaz avec lequel le dispositif d'évacuation (8) est relié de telle sorte qu'il puisse être fixé à lui avant le remplissage de l'élément (3) remplissable et qu'il se détache de lui lors du remplissage de l'élément (3) remplissable, le dispositif d'évacuation (8) étant directement ou indirectement relié, via une liaison amovible, à l'élément (3) remplissable se déchirant lors du remplissage de l'élément (3) remplissable et libérant le dispositif d'évacuation (8), de sorte que le dispositif d'évacuation (8) passe du premier dans le deuxième état.

2. Ensemble airbag selon la revendication 1, **caractérisé en ce que** le dispositif d'évacuation (8) est différent de l'élément (3) remplissable.

3. Ensemble airbag selon la revendication 1 ou 2, **caractérisé par** un élément de commande (2) différent de l'élément remplissable interagissant de telle sorte avec le dispositif d'évacuation (8) que le dispositif d'évacuation (8) est maintenu dans le premier état par l'élément de commande (2) fixé et passe, après la libération de l'élément de commande (2), du premier dans le deuxième état, l'élément de commande (2) étant relié à l'élément remplissable (3) via la liaison amovible.

4. Ensemble airbag selon la revendication 1 ou 2, **caractérisé en ce que** le dispositif d'évacuation (8) est directement relié à l'élément remplissable (3) via la liaison amovible.

5. Ensemble airbag selon l'une quelconque des revendications précédentes, **caractérisé en ce que** l'élément remplissable (3) est réalisé sous la forme d'un tuyau flexible.

6. Ensemble airbag selon l'une quelconque des revendications 3 à 5, **caractérisé en ce que** l'élément de commande (2) est réalisé sous la forme d'une bande ou d'un fil.

7. Ensemble airbag selon l'une quelconque des revendications précédentes, **caractérisé en ce que** la liaison amovible est réalisée au travers d'au moins une couture déchirable (31).

8. Ensemble airbag selon l'une quelconque des revendications précédentes, **caractérisé en ce que** la liaison amovible ferme d'abord au moins en partie l'élément remplissable (3).

9. Ensemble airbag selon l'une quelconque des revendications précédentes, **caractérisé en ce que** le mécanisme de libération (1) comprend un dispositif de remplissage (4) pour remplir l'élément remplissable (3).

10. Ensemble airbag selon la revendication 9, **caractérisé par** une unité de soufflage pour gonfler l'airbag (9), le dispositif de remplissage (4) et l'unité de soufflage étant fixés à un support (5).

11. Ensemble airbag selon l'une quelconque des revendications précédentes, **caractérisé en ce que** le dispositif d'évacuation (8) comprend au moins une ouverture d'évacuation de l'airbag (9).

12. Ensemble airbag selon la revendication 11 en tant que dépendant de l'une des revendications 3 à 10, **caractérisé en ce que** le dispositif d'évacuation (8) comprend un élément de fermeture (81) couplé à l'élément de commande (2) fermant au moins en partie l'ouverture d'évacuation en cas d'élément de commande (2) fixe.

13. Ensemble airbag selon la revendication 12, **caractérisé en ce que** l'élément de fermeture (81) est réalisé sous la forme d'un tuyau flexible.

14. Ensemble airbag selon l'une quelconque des revendications précédentes, **caractérisé par** un boîtier (7) dans lequel l'élément remplissable (3) et l'airbag (9) sont disposés.

15. Ensemble airbag selon l'une quelconque des revendications précédentes, **caractérisé en ce que** l'airbag (9) et l'élément remplissable (3) sont emballés sous vide dans un film (10).
